# EUROPÄISCHE PATENTSCHRIFT

(11) **EP 2 691 615 B1**
(45) Veröffentlichungstag und Bekanntmachung des Hinweises auf die Patenterteilung: **08.07.2015**
(21) Anmeldenummer: 12717231.0
(22) Anmeldetag: 30.03.2012
(51) Int. Cl.: F01N 3/02, F01N 3/20, F01N 3/033

(54) **ABGASREINIGUNGSVORRICHTUNG FÜR EIN WASSERFAHRZEUG UND EIN VERFAHREN ZUM BETRIEB EINER ABGASREINIGUNGSVORRICHTUNG**
EXHAUST EMISSION CONTROL DEVICE FOR A WATER VEHICLE AND METHOD FOR OPERATING AN EXHAUST EMISSION CONTROL DEVICE
DISPOSITIF D'ÉPURATION DE GAZ D'ÉCHAPPEMENT POUR UN VÉHICULE MARIN ET UN PROCÉDÉ POUR FAIRE FONCTIONNER UN DISPOSITIF D'ÉPURATION DE GAZ D'ÉCHAPPEMENT

(30) Priorität: 30.03.2011 DE 102011015513
(43) Veröffentlichungstag der Anmeldung: 05.02.2014
(73) Patentinhaber: Emitec Gesellschaft für Emissionstechnologie mbH, 53797 Lohmar (DE)
(72) Erfinder: DANCKERT, Bernd, 88074 Meckenbeuren (DE); VOGEL, Samuel, 88339 Bad Waldsee (DE); BEYER, Sebastian, 88074 Meckenbeuren (DE)
(74) Vertreter: Rössler, Matthias
(86) Internationale Anmeldenummer: PCT/EP2012/055799
(87) Internationale Veröffentlichungsnummer: WO 2012/131041

(56) Entgegenhaltungen:
- EP-A1- 0 442 331
- US-A- 5 987 885

## Beschreibung

Gegenstand der Erfindung ist eine Abgasreinigungsvorrichtung für ein Wasserfahrzeug und ein Verfahren zum Betrieb einer Abgasreinigungsvorrichtung.

Wasserfahrzeuge weisen regelmäßig großvolumige Verbrennungskraftmaschinen und entsprechend ausgelegte Abgassysteme auf. Aufgrund immer strenger werdender Richtlinien hinsichtlich der zulässigen Emissionen von Verbrennungskraftmaschinen bzw. Antriebseinheiten von Wasserfahrzeugen sind komplexe Abgasreinigungsvorrichtungen auch für Wasserfahrzeuge vielfach erforderlich. Aufgrund des hohen Abgasdurchsatzes (Volumenstrom/Massenstrom) sind auch entsprechend großvolumige Abgasreinigungsvorrichtungen vorzusehen, die entsprechend kostenintensiv sein können. Entsprechende Abgasreinigungsvorrichtungen, z. B. Oxidationskatalysatoren, Speicherelemente, Partikelfilter, SCR-Systeme (Hydrolyse-Katalysatoren und SCR-Katalysatoren) sind einerseits großvolumig auszulegen und andererseits mit einer großen Beschichtungsmenge zu versehen, so dass Schadstoffe im Abgas entsprechend umgesetzt werden können. Dabei ist auch die Baugröße dieser nun notwendigen Abgasbehandlungsvorrichtungen kritisch zu betrachten, weil diese einen erheblichen Bedarf an Bauraum im Wasserfahrzeug beanspruchen und daher bereits bei der Konstruktion entsprechend zu berücksichtigen bzw. auch nur schwer nachträglich zu integrieren sind. Gleichzeitig verursacht dieser zusätzlich erforderliche Bauraum einen erheblichen Kostenaufwand, der bei der Herstellung eines Wasserfahrzeugs ebenfalls zu berücksichtigen ist.

Die US-A-5,987,885 offenbart eine Abgasreinigungsvorrichtung, die auch für Marinemotoren geeignet ist. Ein Wärmetauscher ist stromaufwärts von einem Katalysator angeordnet. Der Wärmetauscher wird zur Regelung der Abgastemperatur eingesetzt, so dass das Abgas eine für die Umsetzung am Katalysator optimale Temperatur aufweist.

Die EP-A1-0 442 331 beschreibt eine Abgaskühlvorrichtung, die zur Verminderung der Ortbarkeit von Abgasen verwendet werden soll. Darin wird eine Abkühlung des Abgases (hier stromabwärts eines Partikelfilter) durch einen mit Seewasser betriebenen Wärmetauscher vorgeschlagen.

Hiervon ausgehend ist es Aufgabe der hier vorliegenden Erfindung, die im Zusammenhang mit dem Stand der Technik geschilderten technischen Probleme zumindest teilweise zu lösen. Es soll insbesondere eine Abgasreinigungsvorrichtung angegeben werden, die einerseits einen kompakten Aufbau und andererseits eine effiziente Abgasreinigung ermöglicht. Zudem soll sie kostengünstig herstellbar und zur Nachrüstung geeignet sein. Weiterhin soll ein entsprechendes Verfahren zum Betrieb einer Abgasreinigungsvorrichtung für ein Wasserfahrzeug angegeben werden.

Diese Aufgaben werden gelöst mit einer Abgasreinigungsvorrichtung gemäß den Merkmalen des Patentanspruchs 1 und durch ein Verfahren zum Betrieb einer Abgasreinigungsvorrichtung gemäß den Merkmalen des Patentanspruchs 3. Vorteilhafte Ausgestaltungen der erfindungsgemäßen Abgasreinigungsvorrichtung, des erfindungsgemäßen Verfahrens und der entsprechenden Anordnung bzw. die entsprechende Nutzung in einem Wasserfahrzeug sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombinierbar sind und weitere Ausgestaltungen der Erfindung aufzeigen. Die Beschreibung, insbesondere im Zusammenhang mit den Figuren, erläutert die Erfindung weiter und führt ergänzende Ausführungsbeispiele der Erfindung an.

Die erfindungsgemäße Abgasreinigungsvorrichtung für ein Wasserfahrzeug umfasst zumindest einen Partikelfilter oder einen SCR-Katalysator sowie einen stromaufwärts davon angeordneten Wärmetauscher, der eine Abgaseintrittsseite und eine Abgasaustrittsseite aufweist und mit Seewasser als Kühlmedium betrieben wird. Der Wärmetauscher ist geeignet, in einem Temperaturbereich eines Abgases an der Abgaseintrittsseite von 300 bis 550 °C, insbesondere von 400 bis 550 °C, einen Volumenstrom des Abgases zwischen Abgaseintrittsseite und Abgasaustrittsseite um mindestens 30 % zu verringern.

Die Abgasreinigungsvorrichtung ist insbesondere geeignet für einen maximalen Abgasmassenstrom von mindestens 1.500 kg/h.

Insbesondere weist das Abgasrohr stromaufwärts des Wärmetauschers einen Innendurchmesser von 75 mm bis 400 mm auf, insbesondere von 75 mm bis 200 mm. Der Wärmetauscher weist insbesondere eine Kühlleistung von 50 kW bis 1.000 kW auf, insbesondere bis ca. 750 kW. Er hat bevorzugt ein Volumen von 0,05 m³ bis 1,0 m³ (Bauraum), besonderes bevorzugt von 0,05 m³ bis 0,5 m³. Bevorzugt ist der Wärmetauscher als Röhrenwärmetauscher oder Plattenwärmetauscher ausgeführt.

In Folge der Anordnung des Wärmetauschers stromaufwärts eines Partikelfilters und/oder eines SCR-Katalysators wird durch die Abkühlung des Abgases eine Verringerung des Volumenstroms des Abgases erreicht. Entsprechend können der stromabwärts angeordnete Partikelfilter und/oder der stromabwärts angeordnete SCR-Katalysator für einen geringeren Volumenstrom ausgelegt werden. Somit ist es hier möglich, kleinvolumige Partikelfilter und/oder SCR-Katalysatoren einzusetzen, die insbesondere eine entsprechend geringere Menge an Beschichtungsmaterial benötigen. Dadurch sinken die Herstellungskosten der Partikelfilter und SCR-Katalysatoren und es ist ein geringerer Bauraum zur Anordnung dieser Komponenten im Wasserfahrzeug erforderlich.

Ein weiterer wesentlicher Vorteil dieser Erfindung ist, dass auf diese Weise (ggf. bedarfsgerecht) der Druckabfall über den Partikelfilter und/oder den SCR-Katalysator eingestellt bzw. reduziert werden kann. Beim Durchströmen des Abgases durch den Partikelfilter und/oder den SCR-Katalysator wird ein Staudruck hin in Richtung zur Verbrennungskraftmaschine aufgebaut, der die dortigen Verbrennungsprozesse beeinträchtigen und damit auch zu Leistungsverlusten führen kann. Das Abkühlen und damit das Reduzieren des Druckabfalls vermeiden diese Effekte.

Gemäß einer besonders vorteilhaften Weiterentwicklung der Abgasreinigungsvorrichtung senkt der Wärmetauscher die Temperatur des Abgases zwischen Abgaseintrittsseite und Abgasaustrittsseite des Wärmetauschers ausgehend von einer Abgastemperatur am Eintritt des Wärmetauschers von 400 bis 550 °C auf höchstens 200 °C, bevorzugt auf höchstens 150 °C und besonders bevorzugt auf höchstens 100 °C an der Abgasaustrittsseite des Wärmetauschers. Der Wärmetauscher ist insbesondere also so ausgelegt, dass eine Reduzierung der Abgastemperatur um bis zu 200 °C bis ca. 350 °C erfolgen kann. Somit kann eine Volumenstromverringerung bezüglich des Abgases von mehr als 45 %, bevorzugt mehr als 60 % erreicht werden. Entsprechend wird der Gegendruck bzw. der Differenzdruck zwischen Abgaseintrittsseite und Abgasaustrittsseite des Partikelfilters und/oder des SCR-Katalysators um ca. 40 bis 90 % gesenkt.

Gemäß einer vorteilhaften Weiterentwicklung ist der Wärmetauscher regelbar und/oder umfasst einen Bypass. Die Regelung des Wärmetauschers erfolgt insbesondere über ein elektronisch und/oder hydraulisch geregeltes Ventil, so dass der Volumenstrom des Seewassers durch den Wärmetauscher entsprechend eingestellt werden kann. Zudem oder alternativ kann ein Bypass (Umgehung der Kühlstrecke des Wärmetauschers) vorgesehen sein, so dass lediglich der Volumenstrom durch den Wärmetauscher bzw. durch den Bypass entsprechend angepasst wird, aber kontinuierlich eine gleichmäßige Menge an Seewasser in den Wärmetauscherkreislauf gefördert werden kann.

Insbesondere wird durch die Regelung des Wärmetauschers erreicht, dass eine für eine katalytische oder andere Reaktion im Partikelfilter und/oder im SCR-Katalysator erforderliche Temperatur nicht unterschritten wird. Insbesondere ist es weiterhin möglich, die Zeitpunkte einer Regeneration des Partikelfilters und/oder des SCR-Katalysators zu bestimmen, indem die Kühlleistung des Wärmetauschers entsprechend reduziert wird. Dabei ist es bevorzugt möglich, dass eine Höchsttemperatur nicht überschritten wird, so dass entsprechende hocheffiziente Beschichtungen für den Partikelfilter und/oder den SCR-Katalysator einsetzbar sind. Bevorzugt wird hier eine Vanadium-Oxid-Beschichtung eingesetzt, die bei Abgastemperaturen von bis zu 450 °C eingesetzt werden kann. Diese weist insbesondere eine hohe Effizienz als Beschichtung im SCR-Katalysator auf, so dass eine Reduzierung des Volumenstroms und eine entsprechende Verringerung der verfügbaren Oberfläche im SCR-Katalysator durch die Verkleinerung des SCR-Katalysators weiterhin eine genügende Umsetzung der Schadstoffe im SCR-Katalysator ermöglicht.

Durch die vorliegende Erfindung wird erstmals die gezielte und geregelte Reduzierung eines Volumenstroms stromaufwärts des Partikelfilters und/oder SCR-Katalysators vorgeschlagen, so dass die durchströmbaren Querschnittsflächen stromabwärts eines Wärmetauschers angeordneter Abgasreinigungsvorrichtungen deutlich reduziert werden können. Durch diese deutliche Verkleinerung der durchströmbaren Querschnittsfläche werden auch der erforderliche Bauraum verringert und die Herstellungskosten dieser Abgasreinigungsvorrichtungen deutlich abgesenkt. Insbesondere die kostenintensive Beschichtung eines SCR-Katalysators kann somit deutlich günstiger bereitgestellt werden, so dass eine hocheffiziente Reinigung des Abgases von Wasserfahrzeugen bei gleichzeitig geringeren Investitionskosten möglich ist. Insbesondere kann bereits der Wärmetauscher eine kleinere durchströmbare Querschnittsfläche auf der Abgasaustrittsseite aufweisen als auf der Abgaseintrittsseite, da der Volumenstrom bevorzugt kontinuierlich im Wärmetauscher gesenkt wird.

Die vorliegende Erfindung ist weiterhin auf ein Verfahren zum Betrieb einer Abgasreinigungsvorrichtung für ein Wasserfahrzeug gerichtet, wobei die Abgasreinigungsvorrichtung zumindest eine Abgasleitung mit zumindest einem Partikelfilter oder einem SCR-Katalysator sowie einen stromaufwärts davon angeordneten Wärmetauscher umfasst. Dabei Erfindungsgemäß weist zumindest der Partikelfilter oder der SCR-Katalysator einen maximal durchströmbaren ersten Querschnitt für das Abgas auf, wobei dieser um mindestens 30 % geringer ist als der von dem Abgas durchströmbare zweite Querschnitt der Abgaseintrittsseite des Wärmetauschers. Der Wärmetauscher wird mit Seewasser als Kühlmedium betrieben. Das Verfahren weist zumindest die folgenden Schritte auf:
a) Bestimmen zumindest einer Abgastemperatur und/oder einer Abgasdruckdifferenz des Partikelfilters und/oder des SCR-Katalysators, und
b) wenn Abgastemperatur und/oder Abgasdruckdifferenz größer als ein Grenzwert sind, dann
c) Reduzieren eines Volumenstroms durch eine Senkung der Abgastemperatur mittels des Wärmetauschers.

Es wird ausdrücklich festgestellt, dass die auf die Abgasreinigungsvorrichtung bezogenen Ausführungen gleichermaßen auf das erfindungsgemäße Verfahren übertragbar sind und umgekehrt. Dabei ist auch unerheblich, ob neben einem oder mehreren Partikelfiltern und/oder SCR-Katalysatoren weitere Abgasreinigungsvorrichtungen vorhanden sind.

Die Abgastemperatur kann rechnerisch und/oder durch geeignete Sensoren an einer oder mehreren Stellen der Abgasleitung bestimmt werden. Bevorzugt wird die Abgastemperatur stromauf des Wärmetauschers ermittelt. Weitere oder alternative Positionen, z. B. zwischen Wärmetauscher und Partikelfilter und/oder SCR-Katalysator, sind jedoch auch möglich. Die Abgasdruckdifferenz des Partikelfilters und/oder des SCR-Katalysators wird ebenfalls rechnerisch und/oder sensorisch in der Abgasleitung selbst bestimmt. Die Abgasdruckdifferenz ergibt sich rechnerisch aus der Differenz von dem jeweiligen Abgasdruck an der Abgaseintrittsseite und an der Abgasaustrittsseite des Partikelfilters und/oder des SCR-Katalysators. Insbesondere wird dazu der Druck vor dem Eintritt in den SCR-Katalysator bzw. in den Partikelfilter gemessen, weil der Druck stromabwärts des Partikelfilters bzw. des SCR-Katalysators ggf. auch rechnerisch bestimmt werden kann.

Der angegebene Grenzwert gibt bspw. eine maximale Abgastemperatur an, die eine mögliche Schädigung der Abgasreinigungsvorrichtung und/oder eine unerwünschte Auswirkung auf die Wirksamkeit/Effizienz der Abgasanlage bzw. der Verbrennungskraftmaschine kennzeichnet. Insbesondere gibt der Grenzwert eine Abgasdruckdifferenz an, die den maximalen möglichen Volumenstrom kennzeichnet, für den der Partikelfilter bzw. SCR-Katalysator ausgelegt ist. Entsprechend wird der Volumenstrom in der Abgasleitung durch eine Senkung der Abgastemperatur mittels des Wärmetauschers reduziert, so dass die Abgastemperatur und/oder die Abgasdruckdifferenz unter den angegebenen Grenzwert abgesenkt werden.

Gemäß einer vorteilhaften Weiterentwicklung des Verfahrens wird, wenn Schritt b) nicht erfüllt ist, das Kühlmedium des Wärmetauschers über einen Bypass des Wärmetauschers geleitet, so dass die Abgastemperatur und der Volumenstrom nicht weiter reduziert werden. Damit wird insbesondere eine unzulässige Reduzierung der Abgastemperatur verhindert, so dass eine ansonsten nicht mehr erfolgende Umsetzung von Schadstoffen in den Abgasreinigungsvorrichtungen weiterhin sichergestellt wird, da die erforderliche Mindest-Reaktionstemperatur aufrecht erhalten wird.

Die vorliegende Erfindung ist insbesondere auf ein Wasserfahrzeug gerichtet, das zumindest eine erfindungsgemäße Abgasreinigungsanlage umfasst sowie eine Steuerung, wobei die Steuerung geeignet ist, das erfindungsgemäße Verfahren durchzuführen.

Ganz besonders bevorzugt ist, wenn der Wärmetauscher ein Teil der Abgasleitung ist, der nahe an dem Antrieb positioniert ist. Ein solcher Teil der Abgasleitung wird beispielsweise auch Krümmer genannt. Ganz besonders bevorzugt ist, dass dieser Teil der Abgasleitung gekühlt wird, so dass auf diese Weise der Wärmetauscher gebildet ist. Insbesondere wird also dieser Teil der Abgasleitung von einem Kühlmedium umspült, beispielsweise in dem ein um die Abgasleitung herum ein Kühlmantel ausgebildet ist.

Auch wenn der Gegenstand dieser Anmeldung vorrangig mit Bezug auf ein Wasserfahrzeug beschrieben ist, kann die Erfindung (unabhängig) auch auf andere Fahrzeuge angewendet werden. Beispielhaft seien hier Automobile (PKW, LKW) ebenso angeführt.

Vorgeschlagen wird demnach auch eine Abgasreinigungsvorrichtung für ein Fahrzeug, zumindest umfassend einen Partikelfilter oder einen SCR-Katalysator sowie einen stromaufwärts davon angeordneten Wärmetauscher, der mit Kühlmedium (17) betrieben wird, wobei der Wärmetauscher eine Abgaseintrittsseite und eine Abgasaustrittsseite aufweist, und geeignet ist in einem Temperaturbereich eines Abgases von 300 bis 550 °C an der Abgaseintrittsseite einen Volumenstrom des Abgases zwischen Abgaseintrittsseite und Abgasaustrittsseite um mindestens 30 % zu verringern.

Somit kann auch folgendes Verfahren gegenüber dem Stand der Technik vorteilhaft sein: Verfahren zum Betrieb einer Abgasreinigungsvorrichtung für ein Fahrzeug, wobei die Abgasreinigungsvorrichtung zumindest eine Abgasleitung mit zumindest einem Partikelfilter oder einem SCR-Katalysator sowie einen stromaufwärts davon angeordneten Wärmetauscher umfasst, wobei der Wärmetauscher mit Kühlmedium betrieben wird, aufweisend zumindest die folgenden Schritte:
a) Bestimmen zumindest einer Abgastemperatur und/oder einer Abgasdruckdifferenz des Partikelfilters und/oder des SCR-Katalysators, und
b) wenn Abgastemperatur und/oder Abgasdruckdifferenz größer als ein Grenzwert sind, dann
c) Reduzieren eines Volumenstroms (8) durch eine Senkung der Abgastemperatur mittels des Wärmetauschers.

Für den Fall der Anwendung bei einem Fahrzeug kann zum Beispiel ein separater Kühlmediumkreislauf genutzt werden und/oder der Kühlmediumkreislauf des Antriebs mit genutzt werden. Damit kommt als Kühlmedium insbesondere Wasser in Betracht.

Im Hinblick auf die bevorzugten Ausgestaltungen der Erfindung, wie sie hier im Hinblick auf die technischen Varianten beim Wärmetaucher und/oder der Abgasreinigungsanlage beschrieben können (insbesondere auch in den abhängig formulierten Ansprüchen), können mit den vorstehenden Anordnungen und Verfahren bei Kraftfahrzeugen ohne Weiteres kombiniert werden, es sei denn dass dies explizit ausgeschlossen wurde oder der Fachmann ohne weiteres erkennt, dass dies nicht möglich ist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Es zeigen schematisch:
- Fig. 1:: Ein Wasserfahrzeug mit einer Abgasreinigungsvorrichtung;
- Fig. 2:: eine Abgasreinigungsvorrichtung gemäß einer ersten Ausführungsform;
- Fig. 3:: eine Abgasreinigungsvorrichtung gemäß einer zweiten Ausführungsform;
- Fig. 4:: eine Darstellung des Verfahrens; und
- Fig. 5:: eine Abgasreinigungsvorrichtung gemäß einer dritten Ausführungsform.

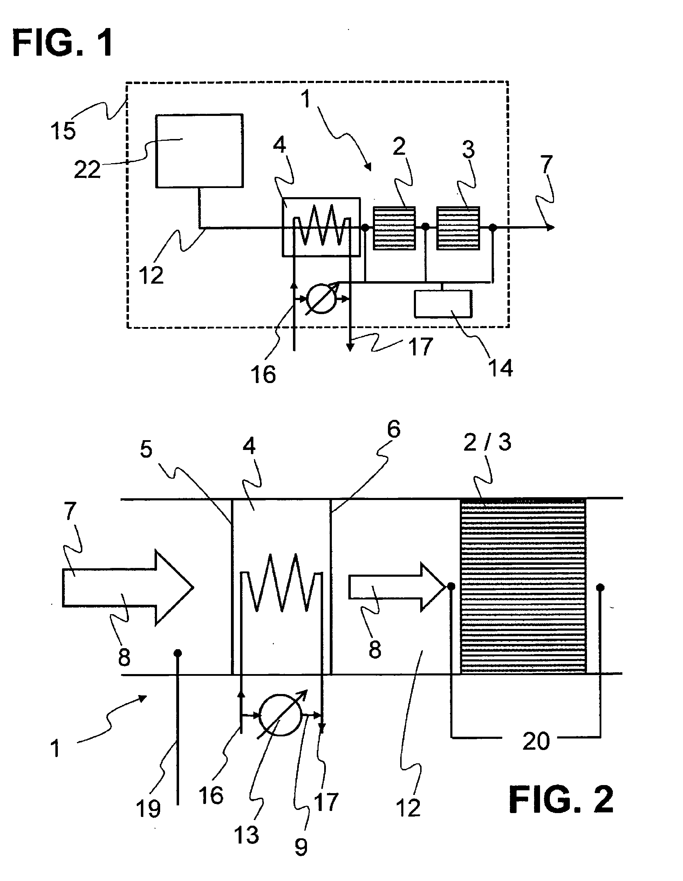

Fig. 1 zeigt schematisch ein Wasserfahrzeug 15 mit einem Antrieb 22 und einer mit dem Antrieb 22 verbundenen Abgasleitung 12. Die Abgasleitung 12 leitet ein Abgas 7 hin zu einer Abgasreinigungsvorrichtung 1, die einen Wärmetauscher 4 und stromabwärts des Wärmetauschers einen Partikelfilter 2 und einen SCR-Katalysator 3 aufweist. Der Wärmetauscher 4 umfasst einen Kühlkreislauf, der mit Seewasser 16 als Kühlmedium 17 betrieben wird. Die Verwendung eines Seewasser-Wärmetauschers ist insbesondere deshalb vorteilhaft, weil dieser als "offener" Kreislauf ausgeführt sein kann, wobei stets frisches (kühles) Seewasser eingespeist und das erwärmte Seewasser (über die Abgasleitung) wieder in das Seewasser abgegeben werden kann. Zudem ist auch möglich, dass dieses Seewasser zur Kühlung weiterer Komponenten des Wasserfahrzeuges eingesetzt wird, wie z. B. der Verbrennungskraftmaschine. Weiterhin umfasst die Abgasreinigungsvorrichtung 1 eine Steuerung 14, die mit entsprechenden Sensoren in der Abgasleitung und dem Wärmetauscher 4 verbunden ist.

Fig. 2 zeigt eine erste Ausführungsform einer Abgasreinigungsvorrichtung 1. Diese umfasst eine Abgasleitung 12, in der ein Wärmetauscher 4 mit einer Abgaseintrittsseite 5 und einer Abgasaustrittsseite 6 angeordnet ist. Stromabwärts des Wärmetauschers 4 ist ein SCR-Katalysator 3 oder ein Partikelfilter 2 angeordnet. Ein Abgas 7 durchströmt die Abgasleitung 12 in Richtung des Wärmetauschers 4. Das Abgas 7 weist einen Volumenstrom 8 stromaufwärts des Wärmetauschers 4 und eine Abgastemperatur 19 auf, die hier über einen in die Abgasleitung 12 ragende (schematisch angedeuteten) Sensor erfasst wird. Der Wärmetauscher 4 umfasst eine Regelung 13 zur Regelung der Kühlleistung des Wärmetauschers 4, der mit Seewasser 16 als Kühlmedium 17 betrieben wird und zusätzlich einen Bypass 9 aufweist. Infolge des Durchströmens des Wärmetauschers 4 wird der Volumenstrom 8 des Abgases 7 verringert. Aus diesem Grund wird der stromabwärts des Wärmetauschers 4 angeordnete SCR-Katalysator 3 bzw. Partikelfilter 2 von einem geringeren Volumenstrom 8 durchströmt als der durch die Abgaseintrittsseite 5 des Wärmetauschers 4 eintretende Volumenstrom 8. Eine Abgasdruckdifferenz 20 wird am SCR-Katalysator 3 bzw. Partikelfilter 2 ermittelt.

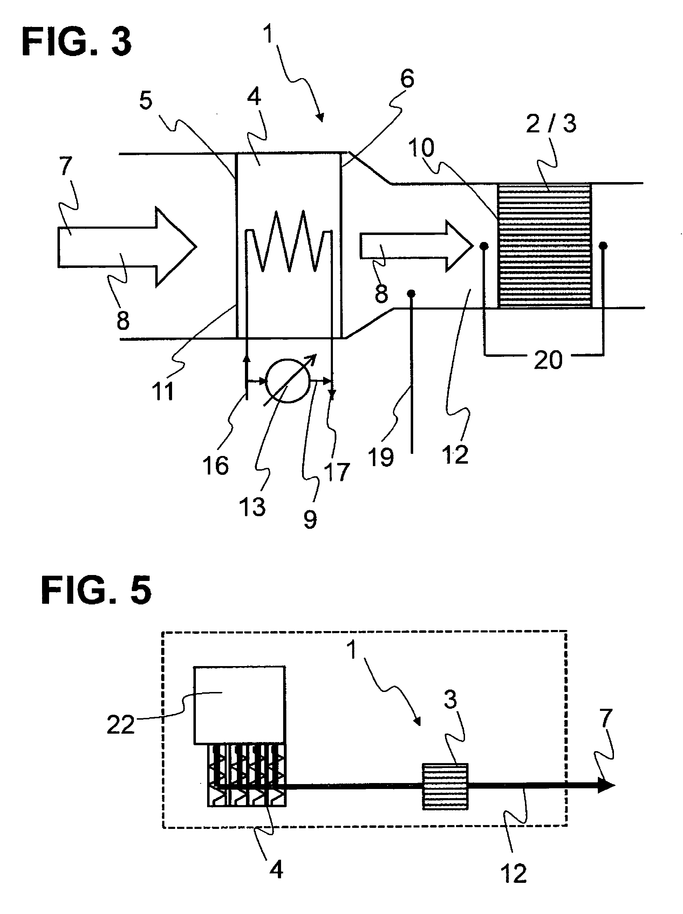

Fig. 3 zeigt eine zweite Ausführungsform der Abgasreinigungsvorrichtung 1, wobei hier ebenfalls eine Abgasleitung 12 gezeigt wird, in der ein Wärmetauscher 4 und stromabwärts des Wärmetauschers 4 ein Partikelfilter 2 und/oder SCR-Katalysator 3 angeordnet ist. Die Abgasleitung 12 weist stromabwärts des Wärmetauscher 4 eine Reduzierung auf, so dass die Abgasleitung 12 eine reduzierte durchströmbare Querschnittsfläche stromabwärts des Wärmetauschers 4 aufweist. Entsprechend ist der erste Querschnitt 10 des Partikelfilters 2 bzw. des SCR-Katalysators 3 kleiner als der zweite Querschnitt 11 der Abgaseintrittsseite 5 des Wärmetauschers 4. Der Wärmetauscher 4 umfasst, wie bereits vorher gezeigt, eine Regelung 13 zur Regelung der Kühlleistung. Als Kühlmedium 17 wird hier Seewasser 16 verwendet. Die Regelung 13 umfasst zudem einen Bypass 9, so dass die Kühlung des Abgases 7 entsprechend eingestellt werden kann. Durch den Wärmetauscher 4 wird durch die entsprechende Regelung 13 der Volumenstrom 8 des Abgases 7 reduziert, so dass stromabwärts des Wärmetauschers 4 lediglich ein reduzierter Volumenstrom 8 den stromabwärts angeordneten Partikelfilter 2 bzw. SCR-Katalysator 3 beaufschlagt. Hier ist ein Sensor zur Messung der Abgastemperatur 19 zwischen Wärmetauscher 4 und SCR-Katalysator 3 bzw. Partikelfilter 2 angeordnet. Die Abgasdruckdifferenz 20 wird über den Partikelfilter 2 bzw. SCR-Katalysator 3 ermittelt.

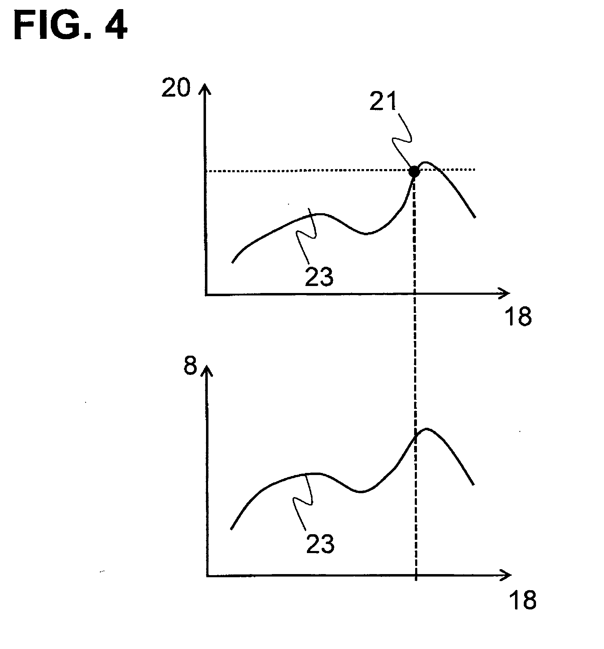

Fig. 4 zeigt schematisch eine Darstellung des Verfahrens. In einem oberen Diagramm ist auf der senkrechten Achse die Abgasdruckdifferenz 20 und auf der horizontalen Achse die Zeit 18 aufgetragen. In dem Diagramm ist der Verlauf 23 der Abgasdruckdifferenz 20 am SCR-Katalysator 3 bzw. Partikelfilter 2 gezeigt (Schritt a) des Verfahrens). Überschreitet dieser Verlauf 23 der Abgasdruckdifferenz 20 einen Grenzwert 21 (Schritt b) des Verfahrens), so wird die Kühlleistung des Wärmetauschers entsprechend gesteigert (Schritt c) des Verfahrens). Im unteren Diagramm ist entsprechend der Volumenstrom 8 an der vertikalen Achse über der Zeit 18 Zeit auf der horizontalen Achse aufgetragen. In dem unteren Diagramm wird der Verlauf 23 des Volumenstroms 8 dargestellt. Der Volumenstrom 8 ist hier stromabwärts des Wärmetauschers 4 angegeben. Durch die Steigerung der Kühlleistung des Wärmetauschers 4 wird bei Überschreiten des Grenzwerts 21 durch die Abgasdruckdifferenz 20 der Volumenstrom 8 entsprechend reduziert, so dass auch die Abgasdruckdifferenz 20 entsprechend abfällt.

Fig. 5 zeigt eine Abgasreinigungsvorrichtung 1 an einem Antrieb 22, z. B. eines Fahrzeuges, wobei der Wärmetauscher 4 an einem Teil der Abgasleitung 12 nahe des Antriebs 22 (dem so genannten Krümmer) angeordnet ist. Dabei bildet der Wärmetauscher 4 eine Art Kühlmantel um die Abgasleitung herum.

### Bezugszeichenliste

- 1: Abgasreinigungsvorrichtung
- 2: Partikelfilter
- 3: SCR-Katalysator
- 4: Wärmetauscher
- 5: Abgaseintrittsseite
- 6: Abgasaustrittsseite
- 7: Abgas
- 8: Volumenstrom
- 9: Bypass
- 10: Erster Querschnitt
- 11: Zweiter Querschnitt
- 12: Abgasleitung
- 13: Regelung
- 14: Steuerung
- 15: Wasserfahrzeug
- 16: Seewasser
- 17: Kühlmedium
- 18: Zeit
- 19: Abgastemperatur
- 20: Abgasdruckdifferenz
- 21: Grenzwert
- 22: Antrieb
- 23: Verlauf

## Patentansprüche

1. Abgasreinigungsvorrichtung (1) für ein Wasserfahrzeug (15), zumindest umfassend einen Partikelfilter (2) oder einen SCR-Katalysator (3) sowie einen stromaufwärts davon angeordneten Wärmetauscher (4), der mit Seewasser (16) als Kühlmedium (17) betrieben wird, **dadurch gekennzeichnet, dass** der Wärmetauscher (4) eine Abgaseintrittsseite (5) und eine Abgasaustrittsseite (6) aufweist, und geeignet ist in einem Temperaturbereich eines Abgases (7) von 300 bis 550 °C an der Abgaseintrittsseite (5) einen Volumenstrom (8) des Abgases (7) zwischen Abgaseintrittsseite (4) und Abgasaustrittsseite (5) durch Abkühlung um mindestens 30 % zu verringern, wobei zumindest der Partikelfilter (2) oder der SCR-Katalysator (3) einen maximalen durchströmbaren ersten Querschnitt (10) für das Abgas (7) aufweist, der um mindestens 30 % geringer ist als der von dem Abgas (7) durchströmbare zweite Querschnitt (11) der Abgaseintrittsseite (5) des Wärmetauschers (4).

2. Abgasreinigungsvorrichtung (1) gemäß Patentanspruch 1, wobei der Wärmetauscher (4) regelbar ist und/oder einen Bypass (9) umfasst.

3. Verfahren zum Betrieb einer Abgasreinigungsvorrichtung (1) für ein Wasserfahrzeug (15), wobei die Abgasreinigungsvorrichtung (1) zumindest eine Abgasleitung (12) mit zumindest einem Partikelfilter (2) oder einem SCR-Katalysator (3) sowie einen stromaufwärts davon angeordneten Wärmetauscher (4) umfasst, wobei der Wärmetauscher (4) mit Seewasser (16) als Kühlmedium (17) betrieben wird, **dadurch gekennzeichnet, dass** zumindest der Partikelfilter (2) oder der SCR Katalysator (3) einen maximalen durchströmbaren ersten Querschnitt (10) für das Abgas (7) aufweist, der um mindestens 30 % geringer ist als der von dem Abgas (7) durchströmbare zweite Querschnitt (11) der Abgaseintrittsseite (5) des Wärmetauschers (4): wobei das Verfahren zumindest die folgenden Schritte aufweist:
a) Bestimmen zumindest einer Abgastemperatur (19) und/oder einer Abgasdruckdifferenz (20) des Partikelfilters (2) und/oder des SCR-Katalysators (3), und
b) wenn Abgastemperatur (19) und/oder Abgasdruckdifferenz (20) größer als ein Grenzwert (21) sind, dann
c) Reduzieren eines Volumenstroms (8) durch eine Senkung der Abgastemperatur (19) mittels des Wärmetauschers (4).

4. Verfahren gemäß Patentanspruch 3, wobei, wenn b) nicht erfüllt ist, das Kühlmedium (17) des Wärmetauschers (4) über einen Bypass (9) des Wärmetauschers (4) geleitet wird.

5. Wasserfahrzeug (15) zumindest aufweisend eine Abgasreinigungsanlage (1) gemäß einem der vorhergehenden Patentansprüche 1 bis 2 sowie eine Steuerung (14), wobei die Steuerung (14) dazu geeignet ist, das Verfahren gemäß einem der Patentansprüche 3 und 4 durchzuführen.

## Claims

1. An exhaust emission control device (1) for a watercraft (15), at least comprising a particulate filter (2) or an SCR catalytic converter (3) and a heat exchanger (4), which is arranged upstream thereof and is operated with seawater (16) as a cooling medium (17), **characterized in that** the heat exchanger (4) has an exhaust gas inlet side (5) and an exhaust gas outlet side (6) and is suitable for reducing a volume flow (8) of an exhaust gas (7) between the exhaust gas inlet side (4) and the exhaust gas outlet side (5) by at least 30 % through cooling in a temperature range of the exhaust gas (7) of 300 to 550° C at the exhaust gas inlet side (5) wherein at least the particulate filter (2) or the SCR catalytic converter (3) has a maximum first throughflow cross section (10) for the exhaust gas (7) which is at least 30 % less than the second throughflow cross section (11) for the exhaust gas (7) on the exhaust gas inlet side (5) of the heat exchanger (4).

2. The exhaust emission control device (1) as claimed in claim 1, wherein the heat exchanger (4) can be regulated and/or comprises a bypass (9).

3. A method for operating an exhaust emission control device (1) for a watercraft (15), wherein the exhaust emission control device (1) comprises at least one exhaust line (12) having at least one particulate filter (2) or one SCR catalytic converter (3) and a heat exchanger (4) arranged upstream thereof, wherein the heat exchanger (4) is operated with seawater (16) as a cooling medium (17), **characterized in that** at least the particulate filter (2) or the SCR catalytic converter (3) has a maximum first throughflow cross section (10) for the exhaust gas (7) which is at least 30% less than the second throughflow cross section (11) for the exhaust gas (7) on the exhaust gas inlet side (5) of the heat exchanger (4); wherein the method comprises at least the following steps:
a) determining at least one exhaust gas temperature (19) and/or one exhaust gas pressure difference (20) of the particulate filter (2) and/or the SCR catalytic converter (3), and
b) if the exhaust gas temperature (19) and/or the exhaust gas pressure difference (20) is greater than a limiting value (21), then
c) reducing a volume flow (8) by lowering the exhaust gas temperature (19) by means of the heat exchanger (4).

4. The method as claimed in claim 3, wherein, if b) is not satisfied, the cooling medium (17) of the heat exchanger (4) is passed via a bypass (9) of the heat exchanger (4).

5. A watercraft (15) at least having an exhaust emission control system (1) as claimed in one of the preceding claims 1 to 2 and a controller (14), wherein the controller (14) is suitable for carrying out the method as claimed in one of claims 3 and 4.

## Revendications

1. Dispositif d'épuration de gaz d'échappement (1) pour un véhicule marin (15), comprenant au moins un filtre à particules (2) ou un catalyseur SCR (3) ainsi qu'un échangeur de chaleur (4) disposé en amont de celui-ci, lequel fonctionne avec de l'eau de mer (16) en tant que fluide de refroidissement (17), **caractérisé en ce que** l'échangeur de chaleur (4) présente un côté d'entrée de gaz échappement (5) et un côté de sortie de gaz d'échappement (6), et est approprié pour réduire d'au moins 30 % par refroidissement, dans une plage de température d'un gaz d'échappement (7) de 300 à 550 °C au niveau du côté d'entrée de gaz d'échappement (5), un débit volumique (8) du gaz d'échappement (7) entre le côté d'entrée de gaz d'échappement (4) et le côté de sortie de gaz d'échappement (5), au moins le filtre à particules (2) ou le catalyseur SCR (3) présentant une première section transversale (10) pour le gaz d'échappement (7) maximale pouvant être traversée par l'écoulement, laquelle est inférieure d'au moins 30 % à la deuxième section transversale (11) du côté d'entrée de gaz d'échappement (5) de l'échangeur de chaleur (4) pouvant être traversée par l'écoulement de gaz d'échappement (7).

2. Dispositif d'épuration de gaz d'échappement (1) selon la revendication 1, dans lequel l'échangeur de chaleur (4) est réglable et/ou comprend une dérivation (9).

3. Procédé pour faire fonctionner un dispositif d'épuration de gaz d'échappement (1) pour un véhicule marin (15), le dispositif d'épuration de gaz d'échappement (1) comprenant au moins une conduite de gaz échappement (12) avec au moins un filtre à particules (2) ou un catalyseur SCR (3) ainsi qu'un échangeur de chaleur (4) disposé en amont de celui-ci, l'échangeur de chaleur (4) fonctionnant avec de l'eau de mer (16) en tant que fluide de refroidissement (17), **caractérisé en ce qu'**au moins le filtre à particules (2) ou le catalyseur SCR (3) présente une première section transversale (10) pour le gaz d'échappement (7) maximale pouvant être traversée par l'écoulement, laquelle est inférieure d'au moins 30 % à la deuxième section transversale (11) du côté d'entrée de gaz d'échappement (5) de l'échangeur de chaleur (4) pouvant être traversée par l'écoulement de gaz d'échappement (7), le procédé présentant au moins les étapes suivantes :
a) détermination d'au moins une température du gaz d'échappement (19) et/ou d'une différence de pression de gaz d'échappement (20) du filtre à particules (2) et/ou du catalyseur SCR (3), et
b) si la température du gaz échappement (19) et/ou la différence de pression de gaz d'échappement (20) sont supérieures à une valeur limite (21), alors
c) réduction d'un débit volumique (8) par un abaissement de la température du gaz d'échappement (19) au moyen de l'échangeur de chaleur (4).

4. Procédé selon la revendication 3, dans lequel, si l'étape b) n'est pas satisfaite, le fluide de refroidissement (17) de l'échangeur de chaleur (4) est conduit par le biais d'une dérivation (9) de l'échangeur de chaleur (4).

5. Véhicule marin (15) présentant au moins une installation d'épuration de gaz d'échappement (1) selon l'une quelconque des revendications 1 à 2, ainsi qu'une commande (14), la commande (14) étant appropriée pour mettre en oeuvre le procédé selon l'une quelconque des revendications 3 et 4.
